# EUROPEAN PATENT SPECIFICATION

(11) **EP 1 950 319 B1**
(45) Date of publication and mention of the grant of the patent: **09.01.2019**
(21) Application number: 06797807.2
(22) Date of filing: 11.09.2006
(51) Int. Cl.: C22F 1/18, B22F 1/00, B22F 9/04, C22C 1/00, C22C 30/00, C22F 1/00, H01M 4/38, H01M 8/04, C22C 1/04, H01M 8/06

(54) **PRODUCING METHOD OF HYDROGEN STORAGE ALLOY**
VERFAHREN ZUR HERSTELLUNG EINER WASSERSTOFFSPEICHERLEGIERUNG
PROCÉDÉ SERVANT À PRODUIRE UN ALLIAGE DE STOCKAGE D'HYDROGÈNE

(30) Priority: 22.09.2005 JP 2005275687
(43) Date of publication of application: 30.07.2008
(73) Proprietor: THE JAPAN STEEL WORKS, LTD., Tokyo 100-8456 (JP); HOKKAIDO UNIVERSITY, Hokkaido 060-0808 (JP)
(72) Inventor: KUBO, Kazuya, Hokkaido (JP); KABUTOMORI, Toshiki, Hokkaido (JP); ARASHIMA, Hironobu, Hokkaido (JP); ITO, Hideaki, Hokkaido (JP); HASHI, Kunihiko, Hokkaido (JP); Oonuki, Soumei, Sapporo, Hokkaido (JP)
(74) Representative: Grünecker Patent- und Rechtsanwälte PartG mbB
(86) International application number: PCT/JP2006/318000
(87) International publication number: WO 2007/034704

(56) References cited:
- JP-A- 11 080 801
- JP-A- 2000 182 612
- JP-A- 2003 313 601
- JP-A- 2003 313 601
- US-A- 5 605 585
- YUEXIANG H ET AL: "Effects of particle size and heat treatment on the electrode performance of a low-cobalt atomized AB5-type hydrogen storage alloy", JOURNAL OF ALLOYS AND COMPOUNDS, ELSEVIER SEQUOIA, LAUSANNE, CH, vol. 330-332, 17 January 2002 (2002-01-17) , pages 831-834, XP027393881, ISSN: 0925-8388 [retrieved on 2002-01-17]
- CHUANG H J ET AL: "Effect of annealing heat treatment on an atomized AB2 hydrogen storage alloy", JOURNAL OF ALLOYS AND COMPOUNDS, ELSEVIER SEQUOIA, LAUSANNE, CH, vol. 285, no. 1-2, 30 June 1999 (1999-06-30), pages 284-291, XP004182615, ISSN: 0925-8388, DOI: 10.1016/S0925-8388(98)01050-0
- KABUTOMORI ET AL: "Hydrogen absorption properties of Ti@?Cr@?A (A = V, Mo or other transition metal) B.C.C. solid solution alloys", JOURNAL OF ALLOYS AND COMPOUNDS, ELSEVIER SEQUOIA, LAUSANNE, CH, vol. 231, no. 1-2, 15 December 1995 (1995-12-15), pages 528-532, XP022269082, ISSN: 0925-8388, DOI: 10.1016/0925-8388(95)01859-X

## Description

### TECHNICAL FIELD

The present invention relates to a producing method of a hydrogen storage alloy that is used in a hydrogen storage material, a hydrogen absorbing material for use in heat exchange, a hydrogen supply material for use in fuel batteries, a negative electrode material for use in Ni-hydrogen batteries, a material for purifying and recovering hydrogen, a hydrogen absorbing material for use in hydrogen gas actuators and so on.

### BACKGROUND ART

There have been a high pressure tank method and a liquid hydrogen method for use in storage and transportation of hydrogen. However, in place thereof, a method that uses a hydrogen storage alloy is gathering attention. As known, a hydrogen storage alloy reversibly reacts with hydrogen to store or release hydrogen with absorption or release of reaction heat. A technology that makes use of the chemical reaction to store or transport hydrogen is being tried to put into practical use, and a technology that makes use of the reaction heat to constitute a heat storage, a heat transportation system or the like is being developed and being put into practical use. As representative hydrogen storage alloys, LaNi₅, TiFe, TiMn_{1.5} and so on are well known. Recently, alloys having a body-centered cubic structure (hereinafter, referred to as a BCC alloy), which has a large effective hydrogen transfer amount around room temperature, are gathering attention. Examples thereof include TiCrV alloys proposed in Patent Documents I and 2 and so on, alloys that are proposed in Patent Document 3 and so on and improved by adding an additive element to TiCrV alloys, BCC alloys based on a TiCr base, which are proposed in Patent Documents 4, 5 and G and so on. Furthermore, BCC alloys obtained by improving the characteristics by use of a special producing method or a procedure such as proposed in Patent Document 7 can be cited.

The production of a hydrogen storage alloy having a BCC structure, wherein a heat treatment is applied in the range of 1250°C to 1450°C for one second to one hour, is known from JP 2003 313601 A. Moreover, a heat treatment which is supplied to a pulverized AB₅ type hydrogen storage alloy is for instance known from US 5 605 585 A. Moreover, a similar method is disclosed in YUEXIANG H ET AL, "Effects of particle size and heat treatment on the electrode performance of a low-cobalt atomized AB5-type hydrogen storage alloy", JOURNAL OF ALLOYS AND COMPOUNDS, ELSEVIER SEQUOIA, LAUSANNE, CH, vol. 330-332. Additionally, the production of an AB₂ hydrogen storage alloy is described in CHUANG H J ET AL, "Effect of annealing heat treatment on an atomized AB2 hydrogen storage alloy", JOURNAL OF ALLOYS AND COMPOUNDS, ELSEVIER SEQUOIA, LAUSANNE, CH, (19990630), vol. 285.
Patent Document 1: JP-A-7-252560
Patent Document 2: JP-A-2001-247927
Patent Document 3: JP-A-2001-3133
Patent Document 4: JP-A-2002-212663
Patent Document 5: JP-A-2002-363671
Patent Document 6: JP-A-2003-64435
Patent Document 7: JP-A-10-245663

### DISCLOSURE OF THE INVENTION

### PROBLEMS THAT THE INVENTION IS TO SOLVE

In order to solve the aforementioned problem, the present invention provides a method defined in claim 1. Further preferred embodiments are defined in the dependent claims. Additionally, it is further provided a BCC phase hydrogen storage alloy having the features defined in claim 6. However, all of the alloys described in the Patent Documents have the effective hydrogen transfer amount of only substantially 2.5%, that is, the effective hydrogen transfer amount is not so much improved.
In the practical applications to various usages, the characteristics of hydrogen storage materials have to be further improved, which include large problems such as an increase in a hydrogen storage amount, lowering of raw material price, an improvement in the plateau characteristics, an improvement in the endurance and so on. Among these, the BCC alloys such as a TiVMn-based alloy and a TiVCr-based alloy have been known since a long time ago that these can store a large amount of hydrogen in comparison with a AB₅ type alloy and a AB₂ type alloy that are already put into practical use; however, there still remain problems to be improved, which include a further increase in the effective hydrogen transfer amount, the endurance and so on,

Although it is known that V, a TiVMn-based alloy and a TiVCr-based alloy can absorb substantially 4.0% by weight of hydrogen, an amount of hydrogen that can be effectively stored and released is substantially two third thereof, and the rest remains as a solid solution phase compounded with hydrogen; accordingly, there is a defect that the efficiency is poor.

Although it is shown in an alloy described in, for instance, Patent Document 5, that, owing to an improvement in a composition, a hydrogen storage amount is 2.5% by weight or more, a further increase in a storage amount is necessary. Furthermore, when hydrogen is repeatedly absorbed and released, the deterioration rate of the alloy is large. As the number of cycles of repetition of absorption and release increases, the equilibrium dissociation pressure is largely deteriorated to be difficult to use as a practical material.

The invention fundamentally intends to overcome the problems and to provide a BCC phase hydrogen storage alloy that can effectively absorb and release hydrogen at normal temperature and has a hydrogen storage amount and the effective hydrogen transfer amount more excellent than that of related materials as well as excellent endurance.

### MEANS FOR SOLVING THE PROBLEMS

That is, among producing methods of the invention of a BCC phase hydrogen storage alloy, an invention of claim 1 provides a producing method of a BCC phase hydrogen storage alloy, including: applying strain relief annealing to a pulverized BCC phase hydrogen storage alloy powder with heating the pulverized hydrogen storage alloy powder at 600°C or more and 1200°C or less for 10 min to 30 hr, wherein the size of the hydrogen storage alloy powder is 10 µm or less.

According to an invention of a producing method of a hydrogen storage alloy of claim 2, in the invention of claim 1, the hydrogen storage alloy powder is obtained by melting the hydrogen storage alloy and applying a pulverizing process to the melt hydrogen storage alloy.

According to an invention of a producing method of a hydrogen storage alloy of claim 3, in the invention of claim 2, the pulverizing process is carried out by any one of a mechanical pulverizing method, a hydrogenating and pulverizing method and a manual pulverizing method or a combination thereof.

According to an invention of a producing method of a hydrogen storage alloy of claim 4, in the invention of claim 2 or 3, a homogenizing treatment is applied to the melted hydrogen storage alloy with heating the melted hydrogen storage alloy at 1000°C or more and 1450°C or less for 1 min to 30 hr and the pulverizing process is applied to the homogenized hydrogen storage alloy.

According to an invention of a producing method of a hydrogen storage alloy of claim 5, in the invention of any one of claims 2 through 4, the hydrogen storage alloy is melted by use of a unidirectional solidifying furnace, a floating zone furnace, a rapid solidification furnace or a cold wall furnace.

That is, according to the invention, the strain before hydrogenation, which is introduced in an alloy when an alloy is produced or the pulverization described below is applied, is effectively relieved by the strain relief annealing to largely diminish a solid solution region of hydrogen. Furthermore, since the alloy is pulverized, the strain is not accumulated and the introduction or accumulation of the strain due to the hydrogenation and propagation thereof are largely reduced to improve the endurance.

The strain relief annealing is carried out by heating at 600°C or more and 1200°C or less for 10 min to 30 hr. When the temperature and time of the strain relief annealing are less than the lower limits, a sufficient strain relief effect cannot be obtained to be difficult to obtain the effect. On the other hand, when the heating temperature exceeds 1200°C, the effect of relieving strain saturates to be useless; accordingly, the upper limit of the heating temperature is set at 1200°C. Furthermore, also when the heating time exceeds 30 hr, the strain relief effect saturates to be useless; accordingly, the upper limit of the heating time is set at 30 hr.

Furthermore, a magnitude of the hydrogen storage alloy powder is 10 µm or less. This is because, when the magnitude thereof exceeds 10 µm, the effect of diminishing the accumulation and propagation of the strain is deteriorated to be difficult to sufficiently obtain the effect.

The hydrogen storage alloy of the invention is supplied in a form of powder obtained by pulverizing a BCC phase hydrogen storage alloy. The pulverization can be applied according to a known process without restricting to a particular process. Any one of mechanical pulverizing processes that use a coarse crusher or a fine crusher or a hydrogenation pulverization process, a ball mill pulverization process, a manual pulverization process that uses a mortar and so on or a combination of at least two thereof may be used.

The pulverization process can be applied to a melt-processed hydrogen storage alloy. A melting process of a hydrogen storage alloy is not restricted particularly in the invention. However, melting and solidifying by use of a unidirectionally solidifying furnace, a floating zone furnace, a rapid solidification furnace or a cold wall furnace are advantageous because these are melting processes that are high in the homogeneity and less in the strain. When, to an alloy obtained by a melting process that is high in the homogeneity and less in the strain like this, the pulverization and the strain relief annealing are applied, an improvement in the characteristics due to the strain relief annealing becomes considerable.

A homogenization process can be applied to the melt-processed hydrogen storage alloy. When the homogenization process is applied, a homogeneous structure can be obtained and the strain caused during alloy production is alleviated to be able to reduce load of the following strain relief annealing. The homogenization process is particularly effective when a melting process other than a process that uses the unidirectionally solidifying furnace that is high in the homogeneity and less in the strain is used to melt. The homogenization process is desirably carried out at 1000°C or more and 1450°C or less for from 1 min to 30 hr. This is because, when the heating temperature and heating time are less than the lower limits, the effect cannot be sufficiently obtained and, when the heating temperature exceeds 1450°C, the alloy is melted and, also when the heating time exceeds 30 hr, the effect saturates to be useless.

In the case of a BCC alloy that is large in the solid solution region of hydrogen and large in the characteristics deterioration accompanying repetition of hydrogen storage and release, the invention can provide a large improvement in the characteristics. Examples of the BCC alloys include a TiCrV-based alloy, a TiCrMo-based alloy, a TiMnV-based alloy and so on.

### EFFECTS OF THE INVENTION

As mentioned above, according to the invention, an inorganic hydrogen storage alloy, since initial strain prior to the hydrogenation is relieved, can largely reduce a solid solution region of hydrogen and can increase an initial hydrogen storage amount and an effective hydrogen transfer amount. Furthermore, the hydrogen storage alloy is finely pulverized to an extent that does not allow accumulating strain to largely reduce the accumulation and propagation of the strain; accordingly, the strain is largely reduced from generating during the hydrogen storage, the absorption plateau is largely increased and the deterioration rate due to the repetition of the hydrogen storage and release can be largely improved. The characteristics improvement can be applied to all inorganic hydrogen storage alloys in which strains such as vacancies and dislocations are present during melting and solidification and strains due to compression and expansion accompanying hydrogen storage and release are generated.

According to the invention, a hydrogen storage alloy can effectively absorb and release a large amount of hydrogen within various temperature ranges, has excellent plateau characteristics and shows excellent characteristics to the endurance of the alloy to the hydrogen absorption and release. Accordingly, the storage and transportation efficiency of hydrogen is improved, and, even when the alloy is used for a long term, an excellent effective hydrogen transfer amount can be maintained.

### BRIEF DESCRIPTION OF THE DRAWINGS

[Fig. 1] A diagram showing a process flow of one implementation step of the invention.
[Fig. 2] A diagram showing a variation in XRD profiles of examples of alloys produced by use of a floating zone furnace in the same example.
[Fig. 3] A diagram showing a variation in a half-value width of a (110) plane of XRD profiles of Fig. 2 in the same example.
[Fig. 4] PCT line diagrams of an alloy to which the invention is applied and an alloy of comparative example in alloys produced by use of a floating zone furnace in the same example.

### BEST MODE FOR CARRYING OUT THE INVENTION

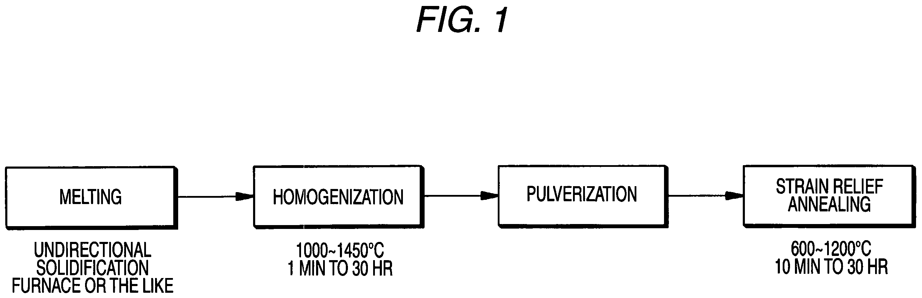

Hereinafter, one embodiment of the invention will be described based on Fig. 1.

A hydrogen storage alloy having a BCC structure is melted preferably by use of a unidirectional solidification furnace, a floating zone furnace, a rapid solidification furnace, a cold wall surface or the like. In the invention, without restricting to an alloy having a specific composition, depending on desired characteristics, an appropriate composition can be selected.

The melted hydrogen storage alloy is subjected to a homogenization process preferably at 1000°C or more and 1450°C or less for 1 min to 30 hr. The homogenization process can be carried out by use of an appropriate heating furnace. However, in the invention, one to which the homogenization process is not applied may be used.

Thereafter, the hydrogen storage alloy is pulverized to a grain diameter of 10 µm or less. The pulverization process can be carried out by use of a mechanical pulverization method that uses a coarse crusher, a fine crusher or the like or a hydrogenation pulverization method, a ball mill pulverization method, a manual pulverization method that uses a mortar or the like, or an appropriate combination thereof.

Thereafter, the pulverized hydrogen storage alloy is heated at 600°C or more and 1200°C or less for 10 min to 30 hr to apply the strain relief annealing. The annealing can be carried out by use of an appropriate heating furnace. The annealing effectively eliminates strains introduced when the alloy is produced and pulverized.

The obtained hydrogen storage alloy has the hydrogen storage and release characteristics excellent particularly in the neighborhood of room temperature and can be used in various applications such as a hydrogen storage material that accompanies absorption and release of hydrogen preferably in a powder state, a hydrogen absorption material for use in heat exchange, a hydrogen feed material for use in fuel cells, a negative electrode material for use in Ni-hydrogen batteries, a hydrogen purifying and recovering material and a hydrogen absorbing material for use in hydrogen gas actuators.

Hereinafter, examples of the invention will be described.

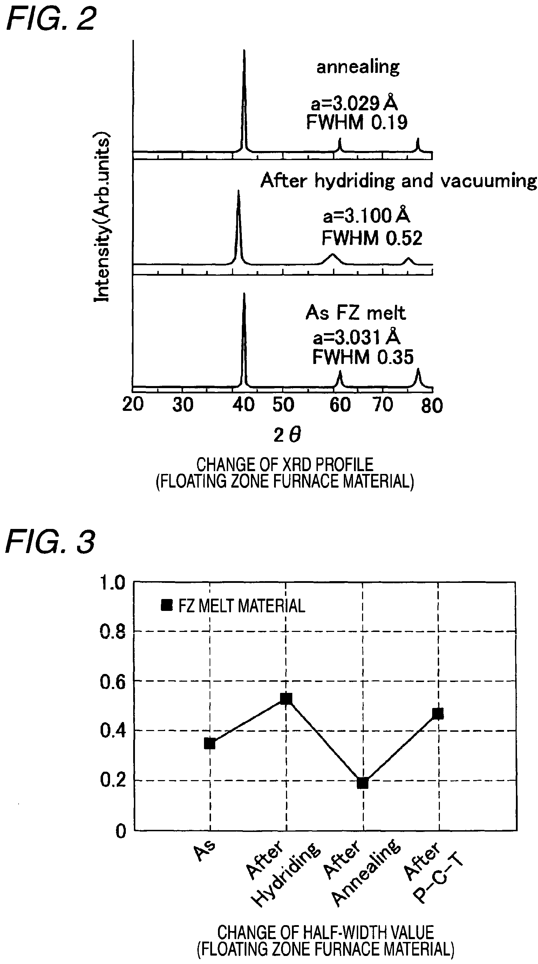

A sample of a Ti₂₄Cr₃₆V₄₀ BCC alloy was prepared by use of a floating zone furnace. The ingot was degassed at 200°C for 2 hr and hydrogen was applied at -20°C under 4.5 MPa to apply the hydrogenation and pulverizing. Furthermore, after dehydrogenation was carried out at 300°C for 2 hr, an agate mortar was used to pulverize finely to 10 µm or less. After that, the strain relief annealing was applied at 1000°C for 30min to remove the strain in the sample. Of the sample material, XRD was carried out of each of an as-melt material, a material after hydrogenation and pulverizing, and a strain-relieved material, the intensity at a diffraction line angle was measured, and results thereof are shown in Fig. 2. Furthermore, a variation of a half-value width of a (110) plane of an XRD profile is shown in Fig. 3.

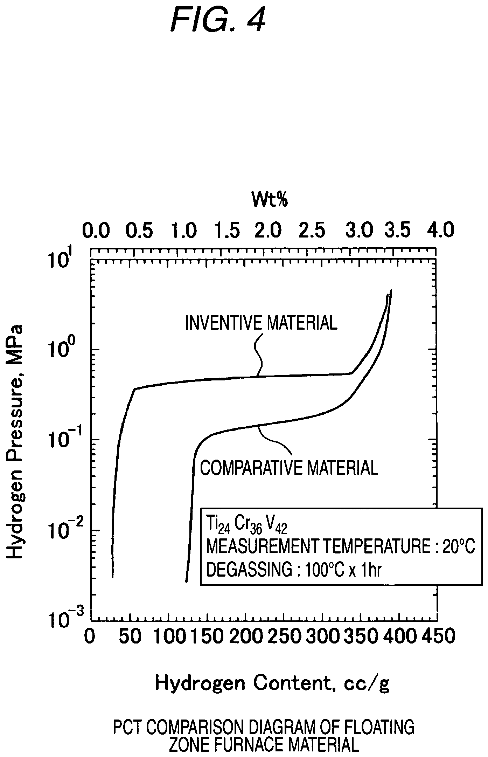

Furthermore, the dehydrogenation was applied at 100°C for 1 hr to the strain-relieved alloy, followed by measuring the hydrogenation characteristics. The results thereof are shown as a PCT diagram in Fig. 4. Furthermore, as a comparative material, a sample prepared by use of a floating zone furnace from a Ti₂₄Cr₃₆V₄₀ BCC alloy was manually pulverized to substantially 75 to 300 µm, followed by dehydrogenating as it is at 100°C for 1 hr, further followed by activating, still further followed by dehydrogenating at 100°C for 1 hr, followed by measuring the hydrogenation characteristics. Results are shown similarly as a PCT diagram in Fig. 4.

As shown in Figs. 2 and 3, it is found that, due to the strain relief annealing under the conditions of 1000°C × 30 min, an XRD peak is sharpened, that is, the strains in the alloy are removed. Furthermore, as seen in Fig. 4, it is found that, even with the same ingot, when the treatment of the invention is applied, the effective hydrogen transfer amount is considerably increased. The treatment of the invention is effective in an increase in the effective hydrogen transfer amount in an ordinary arc melting material as well. However, the advantage of the treatment of the invention is larger in a preparation method like a floating zone furnace that can obtain an alloy higher in the homogeneity and less in the strain than an alloy immediately after the melting and casting; accordingly, an ingot ahead of the pulverization is desirably as high as possible in the homogeneity and as low as possible in the vacancy and dislocation density. Furthermore, as obvious from the example, a sample prepared according to the invention has a large reduction effect of a solid solution region of hydrogen; accordingly, in order to obtain a large increase effect in the effective hydrogen transfer amount, it is applied to a BCC alloy large in the solid solution region of hydrogen in an ordinary preparation method.

The invention was detailed and described with reference to particular embodiments. However, it is obvious to persons of the art that various modifications and corrections can be applied.

### INDUSTRIAL APPLICABILITY

According to the invention, a large amount of hydrogen can be effectively absorbed and released over various temperature ranges, the plateau characteristics are excellent and the endurance of an alloy to the hydrogen absorption and release are excellent. Accordingly, storage and transportation efficiency of hydrogen is improved and, even when an alloy is used for a long term, excellent effective hydrogen transfer amount can be maintained.

## Claims

1. A producing method of a BCC phase hydrogen storage alloy, **characterized by:**
applying strain relief annealing to a pulverized BCC phase hydrogen storage alloy powder with heating the pulverized hydrogen storage alloy powder at 600°C or more and 1200°C or less for 10 min to 30 hr, wherein the size of the hydrogen storage alloy powder is 10 µm or less.

2. The producing method of the hydrogen storage alloy according to claim 1, wherein the hydrogen storage alloy powder is obtained by melting the hydrogen storage alloy and applying a pulverizing process to the melt hydrogen storage alloy.

3. The producing method of the hydrogen storage alloy according to claim 2, wherein the pulverizing process is carried out by use of any one of a mechanical pulverizing method, a hydrogenation pulverizing method or a manual pulverizing method or a combination thereof.

4. The producing method of the hydrogen storage alloy according to claims 2 or 3, wherein a homogenizing treatment is applied to the melted hydrogen storage alloy with heating the melted hydrogen storage alloy at 1000°C or more and 1450°C or less for 1 min to 30 hr and the pulverizing process is applied to the homogenized hydrogen storage alloy.

5. The producing method of the hydrogen storage alloy according to any one of claims 2 through 4, wherein the hydrogen storage alloy is melted by use of a unidirectional solidifying furnace, a floating zone furnace, a rapid solidification furnace or a cold wall furnace.

6. A BCC phase hydrogen storage alloy which is obtainable by a method according to anyone of the foregoing claims.

## Patentansprüche

1. Herstellungsverfahren für eine BCC-Phasen-Wasserstoffspeicherlegierung,
**gekennzeichnet durch:**
Anwenden eines Spannungsentlastungsglühens auf ein pulverisiertes BCC-Phasen-Wasserstoffspeicherlegierungspulver unter Erhitzen des pulverisierten Wasserstoffspeicherlegierungspulvers bei 600 °C oder mehr und 1200 °C oder weniger für 10 min bis 30 h, wobei die Größe des Wasserstoffspeicherlegierungspulvers 10 µm oder weniger beträgt.

2. Herstellungsverfahren für die Wasserstoffspeicherlegierung nach Anspruch 1, wobei das Wasserstoffspeicherlegierungspulver durch Schmelzen der Wasserstoffspeicherlegierung und Anwenden eines Pulverisierungsverfahrens auf die geschmolzene Wasserstoffspeicherlegierung erhalten wird.

3. Herstellungsverfahren für die Wasserstoffspeicherlegierung nach Anspruch 2, wobei das Pulverisierungsverfahren unter Verwendung eines mechanischen Pulverisierungsverfahrens, eines Hydrogenierungs-Pulverisierungsverfahrens oder eines manuellen Pulverisierungsverfahrens oder einer Kombination davon durchgeführt wird.

4. Herstellungsverfahren für die Wasserstoffspeicherlegierung nach Anspruch 2 oder 3, wobei eine Homogenisierungsbehandlung auf die geschmolzene Wasserstoffspeicherlegierung unter Erhitzen der geschmolzenen Wasserstoffspeicherlegierung bei 1000 ° C oder mehr und 1450 ° C oder weniger für 1 min bis 30 Stunden angewendet wird und das Pulverisierungsverfahren auf die homogenisierte Wasserstoffspeicherlegierung angewendet wird.

5. Herstellungsverfahren für die Wasserstoffspeicherlegierung nach einem der Ansprüche 2 bis 4, wobei die Wasserstoffspeicherlegierung durch Verwendung eines unidirektionalen Verfestigungsofens, eines Schwebezonenofens, eines Schnellverfestigungsofens oder eines Kaltwandofens geschmolzen wird.

6. BCC-Phasen-Wasserstoffspeicherlegierung, die durch ein Verfahren nach einem der vorhergehenden Ansprüche erhältlich ist.

## Revendications

1. Procédé de production d'un alliage de stockage d'hydrogène à phase BCC, **caractérisé par** :
l'application d'un recuit de relaxation des contraintes à une poudre d'alliage de stockage d'hydrogène à phase BCC pulvérisée en chauffant la poudre d'alliage de stockage d'hydrogène à phase BCC pulvérisée à 600 °C ou plus et 1200 °C ou moins pendant 10 minutes à 30 heures, la taille de la poudre d'alliage de stockage d'hydrogène à phase BCC étant de 10 µm ou moins.

2. Procédé de production de l'alliage de stockage d'hydrogène selon la revendication 1, dans lequel la poudre d'alliage de stockage d'hydrogène est obtenue par fusion de l'alliage de stockage d'hydrogène et application d'une opération de pulvérisation à l'alliage de stockage d'hydrogène fondu.

3. Procédé de production de l'alliage de stockage d'hydrogène selon la revendication 2, dans lequel l'opération de pulvérisation est effectuée en utilisant l'un quelconque d'un procédé de pulvérisation mécanique, d'un procédé de pulvérisation par hydrogénation ou d'un procédé de pulvérisation manuel, ou une combinaison de ceux-ci.

4. Procédé de production de l'alliage de stockage d'hydrogène selon les revendications 2 ou 3, dans lequel un traitement d'homogénéisation est appliqué à l'alliage de stockage d'hydrogène fondu en chauffant l'alliage de stockage d'hydrogène fondu à 1000 °C ou plus et 1450 °C ou moins pendant 1 min à 30 h et l'opération de pulvérisation est appliquée à l'alliage de stockage d'hydrogène homogénéisé.

5. Procédé de production de l'alliage de stockage d'hydrogène selon l'une quelconque des revendications 2 à 4, dans lequel l'alliage de stockage d'hydrogène est fondu en utilisant un four à solidification unidirectionnelle, un four à zone de flottaison, un four à solidification rapide ou un four à parois froides.

6. Alliage de stockage d'hydrogène à phase BCC qui peut être obtenu par un procédé selon l'une quelconque des revendications précédentes.
